# EUROPEAN PATENT APPLICATION

(11) **EP 4 546 895 A1**
(43) Date of publication of application: **30.04.2025**
(21) Application number: 22947278.2
(22) Date of filing: 22.06.2022
(51) Int. Cl.: H04W 56/00, H04W 74/00

(54) **TRANSMISSION AND RECEPTION POINT (TRP) CONFIGURATION METHOD, AND APPARATUS, DEVICE AND STORAGE MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Stöckeler, Ferdinand
(86) International application number: PCT/CN2022/100461
(87) International publication number: WO 2023/245499

(57) **Abstract**

Provided in the present disclosure are a TRP configuration method, and an apparatus, a device and a storage medium. The method comprises: receiving capability information reported by a terminal device, wherein the capability information comprises at least one of the following: the maximum uplink timing difference supported by the terminal device, and the maximum timing advance (TA) value difference supported by the terminal device; and on the basis of the capability information, determining whether to update a TRP configuration of the terminal device. By means of the method provided in the present disclosure, a network device can update and configure a TRP, which does not cause inter-symbol interference, for a terminal device, such that inter-symbol interference can be eliminated, and the TRP thus can normally schedule data or services for the terminal device to ensure the communication quality.

## Description

### TECHNICAL FIELD

The present invention relates to the field of communication technologies, and in particular to a method for configuring a TRP, an apparatus, a device and a storage medium.

### BACKGROUND

In new radio multi input multi output (New Radio Multi Input Multi Output, NR MIMO) systems, multiple transmission and reception points (Transmission and Reception Point, TRP) may be configured for a terminal, and a function of multi-DCI multi-TRP operation with two TAs is introduced. That is, for different TRPs, their respective timing advance (Timing Advance, TA) values may be configured through their respective downlink control information (Downlink Control Information, DCI) signalings.

In the related technologies, in a case that multiple TRPs are configured for a terminal, after signals undergo multi-path transmission through the multiple TRPs, symbol overlap may occur in the signals transmitted through different paths, which results in the inter-symbol interference. In view of the above, in order to eliminate the inter-symbol interference, a cyclic prefix (Cyclic Prefix, CP) is usually set in a symbol to serve as a buffer region or a guard interval.

However, in a case that the function of multi-DCI multi-TRP operation with two TAs is introduced, after the TRPs are configured for the terminal, TA values for the configured TRPs may change if the terminal moves. If an absolute value of a difference between changed TA values for any two TRPs is greater than the CP, symbols transmitted by these two TRPs will overlap, which causes the inter-symbol interference, thereby affecting the communication quality.

### SUMMARY

The present invention provides a method for configuring a TRP, an apparatus, a device and a storage medium, to address the technical issue of the inter-symbol interference caused by the method in related technologies.

In a first aspect, embodiments of the present invention provide a method for configuring a TRP, which is performed by a network device, including:
receiving capability information reported by a terminal, where the capability information includes at least one of: a maximum uplink timing difference supported by the terminal, or a maximum timing advance (TA) value difference supported by the terminal; and
determining whether to update a TRP configuration for the terminal based on the capability information.

In the present invention, the method for configuring the TRP is provided. The network device may receive the capability information reported by the terminal, and the capability information includes at least one of: the maximum uplink timing difference supported by the terminal, or the maximum timing advance (TA) value difference supported by the terminal. Each of the maximum uplink timing difference and the maximum TA value difference is a critical value that can avoid the inter-symbol interference within the capability range of the terminal. In this way, when the network device subsequently updates the TRP configuration for the terminal based on the capability information, it can perform updating to configure the TRP that does not cause the inter-symbol interference for the terminal based on the maximum uplink timing difference and/or the maximum TA value difference with the aim of "avoiding the inter-symbol interference". As a result, the inter-symbol interference can be eliminated, and the TRP can normally schedule data or a service for the terminal, which ensures the communication quality.

In a second aspect, embodiments of the present invention provide a method for configuring a TRP, which is performed by a terminal, including:
reporting capability information to a network device, where the capability information includes at least one of: a maximum uplink timing difference supported by the terminal, or a maximum timing advance (TA) value difference supported by the terminal.

In a third aspect, embodiments of the present invention provide a communication apparatus, which is configured in a network device, including:
a reception and transmission module, configured to receive capability information reported by a terminal, where the capability information includes at least one of: a maximum uplink timing difference supported by the terminal, or a maximum timing advance (TA) value difference supported by the terminal; and
a processing module, configured to determine whether to update a transmission and reception point (TRP) configuration for the terminal based on the capability information.

In a fourth aspect, embodiments of the present invention provide a communication apparatus, which is configured in a terminal, including:
a reception and transmission module, configured to report capability information to a network device, where the capability information includes at least one of: a maximum uplink timing difference supported by the terminal, or a maximum timing advance (TA) value difference supported by the terminal.

In a fifth aspect, embodiments of the present invention provide a communication apparatus, including a processor. When the processor calls a computer program in a memory, the method described in the first aspect is performed.

In a sixth aspect, embodiments of the present invention provide a communication apparatus, including a processor. When the processor calls a computer program in a memory, the method described in the second aspect is performed.

In a seventh aspect, embodiments of the present invention provide a communication apparatus, including a processor and a memory, where the memory is configured to store a computer program; the processor is configured to execute the computer program stored in the memory to cause the communication apparatus to perform the method described in the first aspect.

In an eighth aspect, embodiments of the present invention provide a communication apparatus, including a processor and a memory, where the memory is configured to store a computer program; the processor is configured to execute the computer program stored in the memory to cause the communication apparatus to perform the method described in the second aspect.

In a ninth aspect, embodiments of the present invention provide a communication apparatus, including a processor and an interface circuit, where the interface circuit is configured to receive code instructions and transmit them to the processor, and the processor is configured to execute the code instructions to cause the apparatus to perform the method described in the first aspect.

In a tenth aspect, embodiments of the present invention provide a communication apparatus, including a processor and an interface circuit, where the interface circuit is configured to receive code instructions and transmit them to the processor, and the processor is configured to execute the code instructions to cause the apparatus to perform the method described in the second aspect.

In an eleventh aspect, embodiments of the present invention provide a communication system, and the system includes the communication apparatus described in the third aspect and the communication apparatus described in the fourth aspect, or the system includes the communication apparatus described in the fifth aspect and the communication apparatus described in the sixth aspect, or the system includes the communication apparatus described in the seventh aspect and the communication apparatus described in the eighth aspect, or the system includes the communication apparatus described in the ninth aspect and the communication apparatus described in the tenth aspect.

In a twelfth aspect, embodiments of the present invention provide a computer readable storage medium, configured to store instructions used by the network device and/or the terminal described above, and when the instructions are executed, the network device is caused to perform the method described in the first aspect and/or the terminal is caused to perform the method described in the second aspect.

In a thirteenth aspect, the present invention further provides a computer program product including a computer program, which, when executed on a computer, causes the computer to perform the method described in any one of the first aspect and the second aspect.

In a fourteenth aspect, the present invention provides a chip system, including at least one processor and an interface, for supporting a network device to implement the functions involved in the first aspect, or for supporting a terminal to implement the functions involved in the second aspect, such as determining or processing at least one of data or information involved in the above method. In a feasible design, the chip system further includes a memory, and the memory is configured to store a computer program and data needed by a source secondary node. The chip system may be formed by chips, or may include chips and other discrete devices.

In a fifteenth aspect, the present invention provides a computer program, which, when executed on a computer, causes the computer to perform the method described in any one of the first aspect and the second aspect.

### BRIEF DESCRIPTION OF THE DRAWINGS

The above and/or additional aspects and advantages of the present invention will become apparent and easy to understand from the following description of the embodiments in conjunction with the drawings.
FIG. 1 is a schematic diagram of an architecture of a communication system according to an embodiment of the present invention;
FIG. 2 is a flow chart of a method for configuring a TRP according to another embodiment of the present invention;
FIG. 3 is a flow chart of a method for configuring a TRP according to another embodiment of the present invention;
FIG. 4 is a flow chart of a method for configuring a TRP according to another embodiment of the present invention;
FIG. 5 is a flow chart of a method for configuring a TRP according to another embodiment of the present invention;
FIG. 6 is a flow chart of a method for configuring a TRP according to another embodiment of the present invention;
FIG. 7 is a flow chart of a method for configuring a TRP according to another embodiment of the present invention;
FIG. 8 is a flow chart of a method for configuring a TRP according to another embodiment of the present invention;
FIG. 9 is a structural diagram of a communication apparatus according to an embodiment of the present invention;
FIG. 10 is a structural diagram of a communication apparatus according to another embodiment of the present invention;
FIG. 11 is a block diagram of user equipment according to an embodiment of the present invention; and
FIG. 12 is a block diagram of a network side device according to an embodiment of the present invention.

### DETAILED DESCRIPTION

Example embodiments will be described in detail hereinafter, examples of which are illustrated in the drawings. When the drawings are referred to in the following description, unless otherwise indicated, same numerals in different drawings represent same or similar elements. The implementations described in the following example embodiments do not represent all implementations consistent with the present invention. Rather, they are merely examples of devices and methods consistent with some aspects of the present invention as recited in the appended claims.

The terms used in the present invention are for the purpose of describing particular embodiments only and are not intended to limit the present invention. The singular forms "a" and "the" used in the present invention and the appended claims are intended to include the plural forms as well, unless otherwise indicated in the context clearly. It should also be understood that the term "and/or" used herein refers to the fact that any or all feasible combinations of one or more of the associated listed items may be included.

It should be understood that although the terms "first", "second", "third", etc., may be used in the present invention to describe various pieces of information, such information should not be limited to these terms. These terms are used only to distinguish pieces of information that are of the same type. For example, without departing from the scope of the present invention, first information may also be referred to as second information, and similarly, second information may also be referred to as first information. Depending on the context, for example, the expressions "if" and "on condition that" used herein may be interpreted as "in a case that" or "when" or "in response to determining".

Embodiments of the present invention are described in detail hereinafter, examples of which are illustrated in the drawings. The same or similar reference numerals refer to the same or similar elements. The embodiments described hereinafter with reference to the drawings are examples and are intended to be used to explain the present invention, which should not be construed as limiting the present invention.

For ease of understanding, terms involved in the present application are first introduced.
1. Timing advance (Timing Advance, TA) value
   It is used for uplink transmission for a terminal, which means that the terminal sends a data packet in advance by a corresponding amount of time based on a corresponding instruction.
2. Inter-symbol interference
   It is an interference caused by overlap at a reception station due to multi-path propagations of the same signal.
3. Cyclic prefix (Cyclic Prefix, CP)

It refers to a prefix of a symbol, which has a repeated end in an orthogonal frequency division multiplexing (Orthogonal Frequency Division Multiplexing, OFDM) radio system. Receivers are typically configured to discard cyclic prefix samples. The CP can be used to combat the effect of multi-path propagation.

In order to better understand a method for configuring a TRP disclosed in embodiments of the present invention, a communication system to which the embodiments of the present invention are applicable is first described hereinafter.

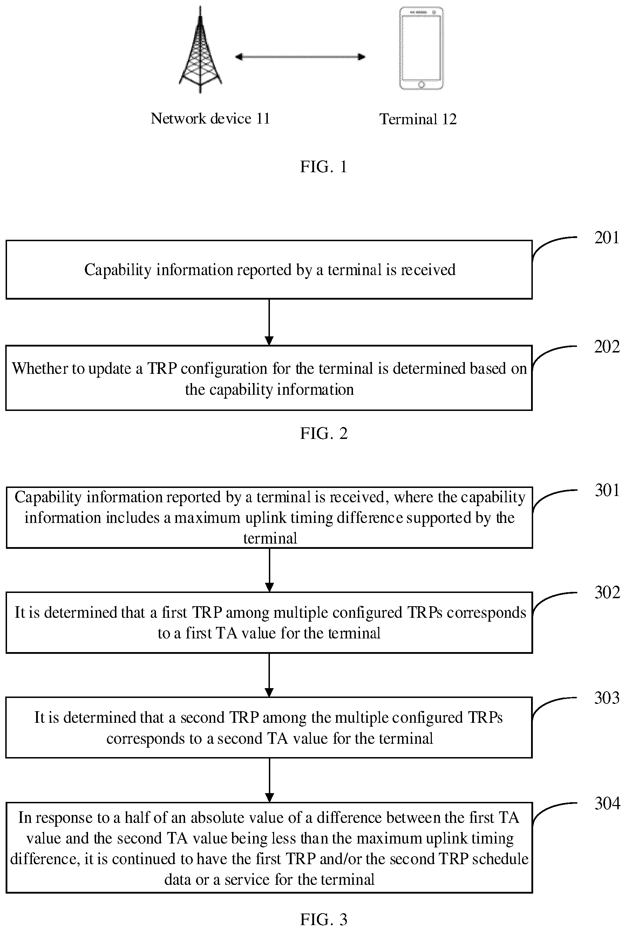

Reference is made to FIG. 1, which is a schematic diagram of an architecture of a communication system according to embodiments of the present invention. The communication system may include, but is not limited to, one network device and one terminal. The quantity and forms of devices shown in FIG. 1 are only for examples and do not constitute a limitation on the embodiments of the present invention. In actual applications, two or more than two network devices and two or more than two terminals may be included. In FIG. 1, a case where the communication system includes a network device 11 and a terminal 12 is taken as an example.

It should be noted that the technical solutions of the embodiments of the present invention can be applied to various communication systems, such as a long term evolution (long term evolution, LTE) system, a 5th generation (5th generation, 5G) mobile communication system, a 5G new radio (new radio, NR) system, or other new mobile communication systems in the future.

The network device 11 in the embodiments of the present invention is an entity on a network side for transmitting or receiving signals. For example, the network device 11 may be an evolved NodeB (evolved NodeB, eNB), a transmission reception point (transmission reception point, TRP), a next generation NodeB (next generation NodeB, gNB) in an NR system, a base station in other mobile communication systems in the future, or an access node in a wireless fidelity (wireless fidelity, WiFi) system, etc. The specific technologies and the specific device form used by the network device are not limited in the embodiments of the present invention. The network device according to the embodiments of the present invention may include a central unit (central unit, CU) and a distributed unit (distributed unit, DU). The CU may also be referred to as a control unit. Protocol layers of the network device, such as a base station, may be separated by using the structure of CU-DU, where functions of some protocol layers are arranged in the CU for centralized control, and functions of some or all of the remaining protocol layers are distributed in the DU, and the CU centrally controls the DU.

The terminal 12 in the embodiments of the present invention is an entity on a user side for receiving or transmitting signals, such as a mobile phone. The terminal may also be referred to as a terminal (terminal), a user equipment (user equipment, UE), a mobile station (mobile station, MS), a mobile terminal (mobile terminal, MT), etc. The terminal may be a car with a communication function, a smart car, a mobile phone, a wearable device, a tablet computer (Pad), a computer with a wireless reception and transmission function, a virtual reality (virtual reality, VR) terminal, an augmented reality (augmented reality, AR) terminal, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), etc. The specific technologies and the specific device form used by the terminal are not limited in the embodiments of the present invention.

It can be understood that the communication system described in the embodiments of the present invention is for more clearly illustrating the technical solutions of the embodiments of the present invention, and does not constitute a limitation on the technical solutions provided by the embodiments of the present invention. A person skilled in the art can know that, with evolution of the system architecture and emergence of new service scenarios, the technical solutions provided by the embodiments of the present invention are also applicable to similar technical problems.

A method for configuring a TRP, an apparatus, a device and a storage medium according to embodiments of the present invention are described in detail hereinafter with reference to the drawings.

FIG. 2 is a flow chart of a method for configuring a TRP according to embodiments of the present invention. The method is performed by a network device. As shown in FIG. 2, the method for configuring the TRP may include the following steps.

Step 201: capability information reported by a terminal is received.

In an embodiment of the present invention, the capability information may include at least one of:
a maximum uplink timing difference supported by the terminal;
a maximum TA value difference in supported by the terminal.

In an embodiment of the present invention, the uplink timing is a time value corresponding to uplink transmission of the terminal (i.e., one-way transmission only); the TA value is a time value corresponding to uplink transmission and downlink transmission (i.e., twoway transmission) between the terminal and the network device.

In an embodiment of the present invention, the maximum uplink timing difference supported by the terminal, and/or the maximum TA value difference supported by the terminal need to be: a critical value that can avoid the inter-symbol interference within the capability range of the terminal.

Specifically, the maximum uplink timing difference supported by the terminal needs to satisfy the following requirement: once a half of an absolute value of a difference between TA values for any two TRPs corresponding to the terminal is greater than or equal to the maximum uplink timing difference, the inter-symbol interference will occur between transmitted signals of the two TRPs if the two TRPs are used to transmit the signals to the terminal.

The maximum TA value difference supported by the terminal needs to satisfy the following requirement: once an absolute value of a difference between TA values for any two TRPs corresponding to the terminal is greater than or equal to the maximum TA value difference, the inter-symbol interference will occur between transmitted signals of the two TRPs if the two TRPs are used to transmit the signals to the terminal.

Furthermore, in an embodiment of the present invention, the maximum uplink timing difference and maximum TA value difference may be specifically determined based on the capability of the terminal. For example, they may be determined based on a CP length of a physical data channel corresponding to the terminal. Each of the maximum uplink timing difference and the maximum TA value difference is a natural number greater than zero.

In addition, in an embodiment of the present invention, a method for the network device to receive the capability information reported by the terminal may include: receiving the capability information reported by the terminal through a radio resource control (Radio Resource Control, RRC) signaling. The RRC signaling may be, for example, at least one of IE MIMO-ParametersPerBand or IE MIMO-ParametersPerBand.

Furthermore, in an embodiment of the present invention, the terminal may specifically be: a terminal that supports receiving downlink signals from different TRPs through independent beam management (Independent Beam Management, IBM) or common beam management (Common Beam Management, CBM). For a terminal supporting IBM, it can use independent reception/transmission beams to perform reception/transmission for different TRPs; and for a terminal supporting CBM, it can use same reception/transmission beams to perform reception/transmission for different TRPs.

Step 202: whether to update a TRP configuration for the terminal is determined based on the capability information.

In an embodiment of the present invention, the network device determines, based on the capability information, whether to update the TRP that has been configured by the network device for the terminal.

Specifically, it should be noted that, in an embodiment of the present invention, after the network device configures multiple TRPs for the terminal, the terminal may move, which may cause a distance between the terminal and each TRP to change. As a result, the TA value for the terminal corresponding to each TRP may also change accordingly. Thus, an absolute value of a difference between changed TA values for two TRPs may be greater than the CP, causing the inter-symbol interference. Therefore, in order to avoid the situation where "the TA values for the configured TRPs change due to the movement of the terminal, thereby causing the inter-symbol interference", after the network device configures the TRPs for the terminal, the network device needs to subsequently determine whether to update the configured TRPs based on the capability information reported by the terminal.

The part about "how the network device determines whether to update the configured TRP based on the capability information reported by the terminal" will be introduced in detail in subsequent embodiments.

In conclusion, according to the method for configuring the TRP according to the embodiments of the present invention, the network device may receive the capability information reported by the terminal, and may determine whether to update the TRP configuration for the terminal based on the capability information. The capability information includes at least one of the maximum uplink timing difference supported by the terminal or the maximum TA value difference supported by the terminal. Each of the maximum uplink timing difference and the maximum TA value difference is a critical value that can avoid the inter-symbol interference within the capability range of the terminal. In this way, when the network device subsequently updates the TRP configuration for the terminal based on the capability information, it can perform updating to configure the TRP that does not cause the inter-symbol interference for the terminal based on the maximum uplink timing difference and/or the maximum TA value difference with the aim of "avoiding the inter-symbol interference". As a result, the inter-symbol interference can be eliminated, and the TRP can normally schedule data or a service for the terminal, which ensures the communication quality.

FIG. 3 is a flow chart of a method for configuring a TRP according to embodiments of the present invention. The method is performed by a network device. As shown in FIG. 3, the method for configuring the TRP may include the following steps.

Step 301: capability information reported by a terminal is received, where the capability information includes a maximum uplink timing difference supported by the terminal.

For the relevant introduction of step 301, reference may be made to the description of the above embodiments.

Step 302: it is determined that a first TRP among multiple configured TRPs corresponds to a first TA value for the terminal.

In an embodiment of the present invention, the first TRP may be any one of the multiple TRPs that the network device has configured for the terminal, and the first TA value may be configured by the network device for the terminal.

Step 303: it is determined that a second TRP among the multiple configured TRPs corresponds to a second TA value for the terminal.

In an embodiment of the present invention, the second TRP may be any one of the multiple TRPs that the network device has configured for the terminal except the first TRP, and the second TA value may be configured by the network device for the terminal.

Step 304: in response to a half of an absolute value of a difference between the first TA value and the second TA value being less than the maximum uplink timing difference, it is continued to have the first TRP and/or the second TRP schedule data or a service for the terminal.

In an embodiment of the present invention, in a case that a half of the absolute value of the difference between the first TA value and the second TA value is less than the maximum uplink timing difference, it means that: when the first TRP and the second TRP are used to transmit signals, there will be no inter-symbol interference between transmitted signals of the first TRP and the second TRP, and thus the first TRP and/or the second TRP can continue to be used for scheduling data or a service for the terminal.

It should be noted that, in an embodiment of the present invention, a method for scheduling the data or the service for the terminal through the first TRP and/or the second TRP may specifically be:
scheduling at least one of a physical downlink control channel (physical downlink control channel, PDCCH), a physical downlink shared channel (physical downlink shared channel, PDSCH), a physical uplink control channel (PUCCH), or a physical uplink shared channel (physical uplink shared channel, PUSCH) through the first TRP and/or the second TRP, to schedule the data or the service for the terminal.

In conclusion, according to the method for configuring the TRP according to the embodiments of the present invention, the network device may receive the capability information reported by the terminal, and may determine whether to update the TRP configuration for the terminal based on the capability information. The capability information includes at least one of the maximum uplink timing difference supported by the terminal or the maximum TA value difference supported by the terminal. Each of the maximum uplink timing difference and the maximum TA value difference is a critical value that can avoid the inter-symbol interference within the capability range of the terminal. In this way, when the network device subsequently updates the TRP configuration for the terminal based on the capability information, it can perform updating to configure the TRP that does not cause the inter-symbol interference for the terminal based on the maximum uplink timing difference and/or the maximum TA value difference with the aim of "avoiding the inter-symbol interference". As a result, the inter-symbol interference can be eliminated, and the TRP can normally schedule data or a service for the terminal, which ensures the communication quality.

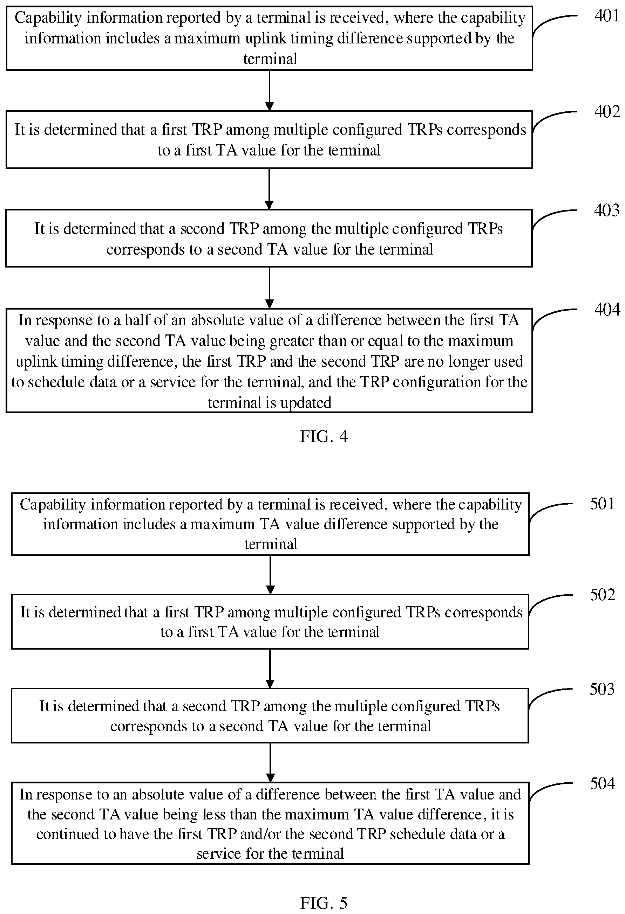

FIG. 4 is a flow chart of a method for configuring a TRP according to embodiments of the present invention. The method is performed by a network device. As shown in FIG. 4, the method for configuring the TRP may include the following steps.

Step 401: capability information reported by a terminal is received, where the capability information includes a maximum uplink timing difference supported by the terminal.

Step 402: it is determined that a first TRP among multiple configured TRPs corresponds to a first TA value for the terminal.

Step 403: it is determined that a second TRP among the multiple configured TRPs corresponds to a second TA value for the terminal.

For the relevant introduction of steps 401-403, reference may be made to the description of the above embodiments.

Step 404: in response to a half of an absolute value of a difference between the first TA value and the second TA value being greater than or equal to the maximum uplink timing difference, the first TRP and the second TRP are no longer used to schedule data or a service for the terminal, and the TRP configuration for the terminal is updated.

In an embodiment of the present invention, in a case that a half of the absolute value of the difference between the first TA value and the second TA value is greater than or equal to the maximum uplink timing difference, it means that: if the first TRP and the second TRP are still used to transmit signals, the inter-symbol interference will occur between transmitted signals of the first TRP and the second TRP. In view of the above, in order to eliminate the inter-symbol interference and ensure the communication quality, the first TRP and the second TRP need to no longer be used to schedule data or a service for the terminal, and the TRP configuration for the terminal needs to be updated.

In an embodiment of the present invention, a method for updating the TRP configuration for the terminal may include:
initializing a TRP configuration process to configure a new TRP for the terminal, in which the new configured TRP needs to meet one of:
a half of an absolute value of a difference between a TA value for the new TRP corresponding to the terminal and a TA value for other TRP corresponding to the terminal is less than the maximum uplink timing difference supported by the terminal; or
an absolute value of a difference between a TA value for the new TRP corresponding to the terminal and a TA value for other TRP corresponding to the terminal is less than the maximum TA value difference supported by the terminal.

In conclusion, according to the method for configuring the TRP according to the embodiments of the present invention, the network device may receive the capability information reported by the terminal, and may determine whether to update the TRP configuration for the terminal based on the capability information. The capability information includes at least one of the maximum uplink timing difference supported by the terminal or the maximum TA value difference supported by the terminal. Each of the maximum uplink timing difference and the maximum TA value difference is a critical value that can avoid the inter-symbol interference within the capability range of the terminal. In this way, when the network device subsequently updates the TRP configuration for the terminal based on the capability information, it can perform updating to configure the TRP that does not cause the inter-symbol interference for the terminal based on the maximum uplink timing difference and/or the maximum TA value difference with the aim of "avoiding the inter-symbol interference". As a result, the inter-symbol interference can be eliminated, and the TRP can normally schedule data or a service for the terminal, which ensures the communication quality.

FIG. 5 is a flow chart of a method for configuring a TRP according to embodiments of the present invention. The method is performed by a network device. As shown in FIG. 5, the method for configuring the TRP may include the following steps.

Step 501: capability information reported by a terminal is received, where the capability information includes a maximum TA value difference supported by the terminal.

Step 502: it is determined that a first TRP among multiple configured TRPs corresponds to a first TA value for the terminal.

Step 503: it is determined that a second TRP among the multiple configured TRPs corresponds to a second TA value for the terminal.

For the relevant introduction of steps 501-503, reference may be made to the description of the above embodiments.

Step 504: in response to an absolute value of a difference between the first TA value and the second TA value being less than the maximum TA value difference, it is continued to have the first TRP and/or the second TRP schedule data or a service for the terminal.

In an embodiment of the present invention, in a case that the absolute value of the difference between the first TA value and the second TA value is less than the maximum TA value difference, it means that: when the first TRP and the second TRP are used to transmit signals, there will be no inter-symbol interference between the transmitted signals of the first TRP and the second TRP, and thus the first TRP and/or the second TRP can continue to be used for scheduling data or a service for the terminal.

It should be noted that, in an embodiment of the present invention, the method for scheduling the data or the service for the terminal through the first TRP and/or the second TRP may specifically be:
scheduling at least one of a PDCCH, a PDSCH, a PUCCH, or a PUSCH through the first TRP and/or the second TRP, to schedule the data or the services for the terminal.

In conclusion, according to the method for configuring the TRP according to the embodiments of the present invention, the network device may receive the capability information reported by the terminal, and may determine whether to update the TRP configuration for the terminal based on the capability information. The capability information includes at least one of the maximum uplink timing difference supported by the terminal or the maximum TA value difference supported by the terminal. Each of the maximum uplink timing difference and the maximum TA value difference is a critical value that can avoid the inter-symbol interference within the capability range of the terminal. In this way, when the network device subsequently updates the TRP configuration for the terminal based on the capability information, it can perform updating to configure the TRP that does not cause the inter-symbol interference for the terminal based on the maximum uplink timing difference and/or the maximum TA value difference with the aim of "avoiding the inter-symbol interference". As a result, the inter-symbol interference can be eliminated, and the TRP can normally schedule data or a service for the terminal, which ensures the communication quality.

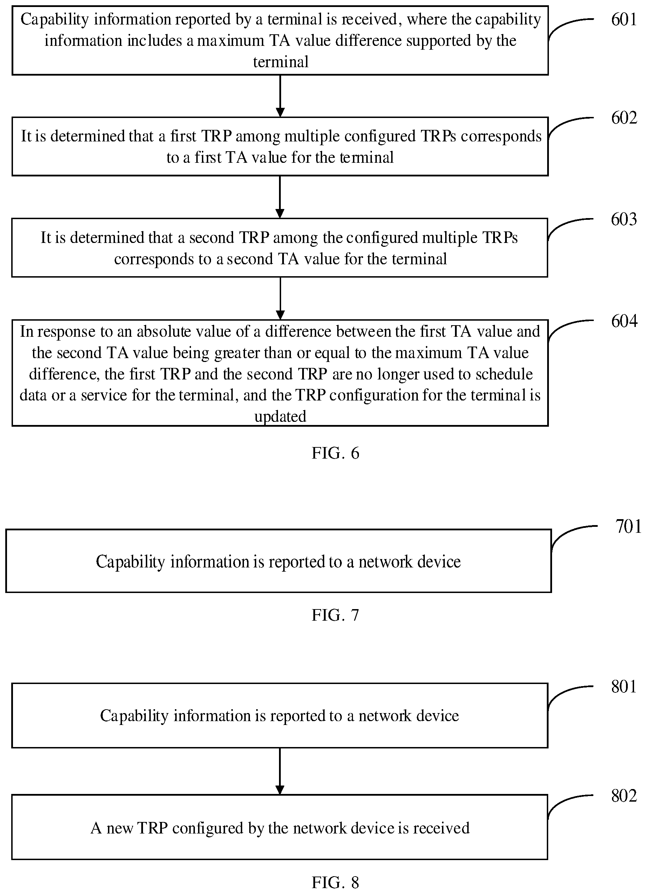

FIG. 6 is a flow chart of a method for configuring a TRP according to embodiments of the present invention. The method is performed by a network device. As shown in FIG. 6, the method for configuring the TRP may include the following steps.

Step 601: capability information reported by a terminal is received, where the capability information includes a maximum TA value difference supported by the terminal.

Step 602: it is determined that a first TRP among multiple configured TRPs corresponds to a first TA value for the terminal.

Step 603: it is determined that a second TRP among the configured multiple TRPs corresponds to a second TA value for the terminal.

For the relevant introduction of steps 601-603, reference may be made to the description of the above embodiments.

Step 604: in response to an absolute value of a difference between the first TA value and the second TA value being greater than or equal to the maximum TA value difference, the first TRP and the second TRP are no longer used to schedule data or a service for the terminal, and the TRP configuration for the terminal is updated.

In an embodiment of the present invention, in a case that the absolute value of the difference between the first TA value and the second TA value is greater than or equal to the maximum TA value difference, it means that: if the first TRP and the second TRP are still used to transmit signals, the inter-symbol interference will occur between the transmitted signals of the first TRP and the second TRP. In view of the above, in order to eliminate the inter-symbol interference and ensure the communication quality, the first TRP and the second TRP need to no longer be used to schedule data or a service for the terminal, and the TRP configuration for the terminal needs to be updated.

In an embodiment of the present invention, the method for updating the TRP configuration for the terminal may include:

initializing a TRP configuration process to configure a new TRP for the terminal, in which the new configured TRP needs to meet one of:
a half of an absolute value of a difference between a TA value for the new TRP corresponding to the terminal and a TA value for other TRP corresponding to the terminal is less than the maximum uplink timing difference supported by the terminal; or,
an absolute value of a difference between a TA value for the new TRP corresponding to the terminal and a TA value for other TRP corresponding to the terminal is less than the maximum TA value difference supported by the terminal.

In conclusion, according to the method for configuring the TRP according to the embodiments of the present invention, the network device may receive the capability information reported by the terminal, and may determine whether to update the TRP configuration for the terminal based on the capability information. The capability information includes at least one of the maximum uplink timing difference supported by the terminal or the maximum TA value difference supported by the terminal. Each of the maximum uplink timing difference and the maximum TA value difference is a critical value that can avoid the inter-symbol interference within the capability range of the terminal. In this way, when the network device subsequently updates the TRP configuration for the terminal based on the capability information, it can perform updating to configure the TRP that does not cause the inter-symbol interference for the terminal based on the maximum uplink timing difference and/or the maximum TA value difference with the aim of "avoiding the inter-symbol interference". As a result, the inter-symbol interference can be eliminated, and the TRP can normally schedule data or a service for the terminal, which ensures the communication quality.

FIG. 7 is a flow chart of a method for configuring a TRP according to embodiments of the present invention. The method is performed by a terminal. As shown in FIG. 7, the method for configuring the TRP may include the following step.

Step 701: capability information is reported to a network device.

The capability information may include at least one of the following:
a maximum uplink timing difference supported by the terminal; or,
a maximum TA value difference supported by the terminal.

Furthermore, in an embodiment of the present invention, the terminal may use an RRC signaling (such as IE MIMO-ParametersPerBand and/or IE MIMO-ParametersPerBand) to report the capability information to the network device.

For a detailed description of step 701, reference may be made to the description of the above embodiments, and details are not described herein again in the embodiments of the present invention.

In conclusion, according to the method for configuring the TRP according to the embodiments of the present invention, the network device may receive the capability information reported by the terminal, and may determine whether to update the TRP configuration for the terminal based on the capability information. The capability information includes at least one of the maximum uplink timing difference supported by the terminal or the maximum TA value difference supported by the terminal. Each of the maximum uplink timing difference and the maximum TA value difference is a critical value that can avoid the inter-symbol interference within the capability range of the terminal. In this way, when the network device subsequently updates the TRP configuration for the terminal based on the capability information, it can perform updating to configure the TRP that does not cause the inter-symbol interference for the terminal based on the maximum uplink timing difference and/or the maximum TA value difference with the aim of "avoiding the inter-symbol interference". As a result, the inter-symbol interference can be eliminated, and the TRP can normally schedule data or a service for the terminal, which ensures the communication quality.

FIG. 8 is a flow chart of a method for configuring a TRP according to embodiments of the present invention. The method is performed by a terminal. As shown in FIG. 8, the method for configuring the TRP may include the following steps.

Step 801: capability information is reported to a network device.

The capability information may include at least one of the following:
a maximum uplink timing difference supported by the terminal; or,
a maximum TA value difference supported by the terminal.

Step 802: a new TRP configured by the network device is received.

In an embodiment of the present invention, the TRP may schedule data or a service for the terminal by scheduling at least one of a PDCCH, a PDSCH, a PUCCH, or a PUSCH.

For a detailed description of steps 801-802, reference may be made to the description of the above embodiments, and details are not described herein again in the embodiments of the present invention.

In conclusion, according to the method for configuring the TRP according to the embodiments of the present invention, the network device may receive the capability information reported by the terminal, and may determine whether to update the TRP configuration for the terminal based on the capability information. The capability information includes at least one of the maximum uplink timing difference supported by the terminal or the maximum TA value difference supported by the terminal. Each of the maximum uplink timing difference and the maximum TA value difference is a critical value that can avoid the inter-symbol interference within the capability range of the terminal. In this way, when the network device subsequently updates the TRP configuration for the terminal based on the capability information, it can perform updating to configure the TRP that does not cause the inter-symbol interference for the terminal based on the maximum uplink timing difference and/or the maximum TA value difference with the aim of "avoiding the inter-symbol interference". As a result, the inter-symbol interference can be eliminated, and the TRP can normally schedule data or a service for the terminal, which ensures the communication quality.

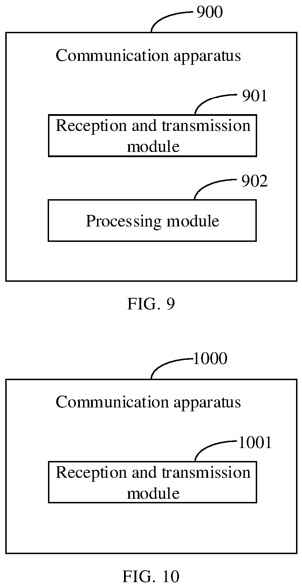

FIG. 9 is a structural diagram of a communication apparatus according to embodiments of the present invention. As shown in FIG. 9, the apparatus may include a reception and transmission module and a processing module.

The reception and transmission module is configured to receive capability information reported by a terminal, where the capability information includes at least one of:
a maximum uplink timing difference supported by the terminal; or
a maximum timing advance TA value difference supported by the terminal.

The processing module is configured to determine whether to update a TRP configuration for the terminal based on the capability information.

In conclusion, based on the communication apparatus according to the embodiments of the present invention, the network device may receive the capability information reported by the terminal, and may determine whether to update the TRP configuration for the terminal based on the capability information. The capability information includes at least one of the maximum uplink timing difference supported by the terminal or the maximum TA value difference supported by the terminal. Each of the maximum uplink timing difference and the maximum TA value difference is a critical value that can avoid the inter-symbol interference within the capability range of the terminal. In this way, when the network device subsequently updates the TRP configuration for the terminal based on the capability information, it can perform updating to configure the TRP that does not cause the inter-symbol interference for the terminal based on the maximum uplink timing difference and/or the maximum TA value difference with the aim of "avoiding the inter-symbol interference". As a result, the inter-symbol interference can be eliminated, and the TRP can normally schedule data or a service for the terminal, which ensures the communication quality.

Optionally, in an embodiment of the present invention, in response to the capability information including the maximum uplink timing difference supported by the terminal, the processing module is further configured to:
determine that a first TRP among multiple configured TRPs corresponds to a first TA value for the terminal;
determine that a second TRP among the multiple configured TRPs corresponds to a second TA value for the terminal; and
in response to a half of an absolute value of a difference between the first TA value and the second TA value being less than the maximum uplink timing difference, continue to have the first TRP and/or the second TRP schedule data or a service for the terminal.

Optionally, in an embodiment of the present invention, in response to the capability information including the maximum uplink timing difference supported by the terminal, the processing module is further configured to:
determine that a first TRP among multiple configured TRPs corresponds to a first TA value for the terminal;
determine that a second TRP among the multiple configured TRPs corresponds to a second TA value for the terminal; and
in response to a half of an absolute value of a difference between the first TA value and the second TA value being greater than or equal to the maximum uplink timing difference, stop utilizing the first TRP and the second TRP to schedule data or a service for the terminal, and update the TRP configuration for the terminal.

Optionally, in an embodiment of the present invention, in response to the capability information including the maximum TA value difference supported by the terminal, the processing module is further configured to:
determine that a first TRP among multiple configured TRPs corresponds to a first TA value for the terminal;
determine that a second TRP among the multiple configured TRPs corresponds to a second TA value for the terminal; and
in response to an absolute value of a difference between the first TA value and the second TA value being less than the maximum TA value difference, continue to have the first TRP and/or the second TRP schedule data or a service for the terminal.

Optionally, in an embodiment of the present invention, in response to the capability information including the maximum TA value difference supported by the terminal, the processing module is further configured to:
determine that a first TRP among multiple configured TRPs corresponds to a first TA value for the terminal;
determine that a second TRP among the multiple configured TRPs corresponds to a second TA value for the terminal; and
in response to an absolute value of a difference between the first TA value and the second TA value being greater than or equal to the maximum TA value difference, stop utilizing the first TRP and the second TRP to schedule data or a service for the terminal, and update the TRP configuration for the terminal.

Optionally, in an embodiment of the present invention, the processing module is further configured to:
schedule at least one of a physical downlink control channel (PDCCH), a physical downlink shared channel (PDSCH), a physical uplink control channel (PUCCH), or a physical uplink shared channel (PUSCH) through the first TRP and/or the second TRP, to schedule the data or the service for the terminal.

Optionally, in an embodiment of the present invention, the processing module is further configured to:
initialize a TRP configuration process to configure a new TRP for the terminal.

Optionally, in an embodiment of the present invention, the reception and transmission module is further configured to:
receive the capability information reported by the terminal through a radio resource control (RRC) signaling.

FIG. 10 is a structural diagram of a communication apparatus according to embodiments of the present invention. As shown in FIG. 10, the apparatus may include a reception and transmission module.

The reception and transmission module is configured to report capability information to a network device, where the capability information includes at least one of
a maximum uplink timing difference supported by the terminal; or
a maximum TA value difference supported by the terminal.

In conclusion, based on the communication apparatus according to the embodiments of the present invention, the network device may receive the capability information reported by the terminal, and may determine whether to update the TRP configuration for the terminal based on the capability information. The capability information includes at least one of the maximum uplink timing difference supported by the terminal or the maximum TA value difference supported by the terminal. Each of the maximum uplink timing difference and the maximum TA value difference is a critical value that can avoid the inter-symbol interference within the capability range of the terminal. In this way, when the network device subsequently updates the TRP configuration for the terminal based on the capability information, it can perform updating to configure the TRP that does not cause the inter-symbol interference for the terminal based on the maximum uplink timing difference and/or the maximum TA value difference with the aim of "avoiding the inter-symbol interference". As a result, the inter-symbol interference can be eliminated, and the TRP can normally schedule data or a service for the terminal, which ensures the communication quality.

Optionally, in an embodiment of the present invention, the apparatus is further configured to:
receive a new TRP configured by the network device.

Optionally, in an embodiment of the present invention, the TRP schedules data or a service for the terminal by scheduling at least one of a PDCCH, a PDSCH, a PUCCH, or a PUSCH.

Optionally, in an embodiment of the present invention, the reception and transmission module is further configured to:
report the capability information to the network device through an RRC signaling.

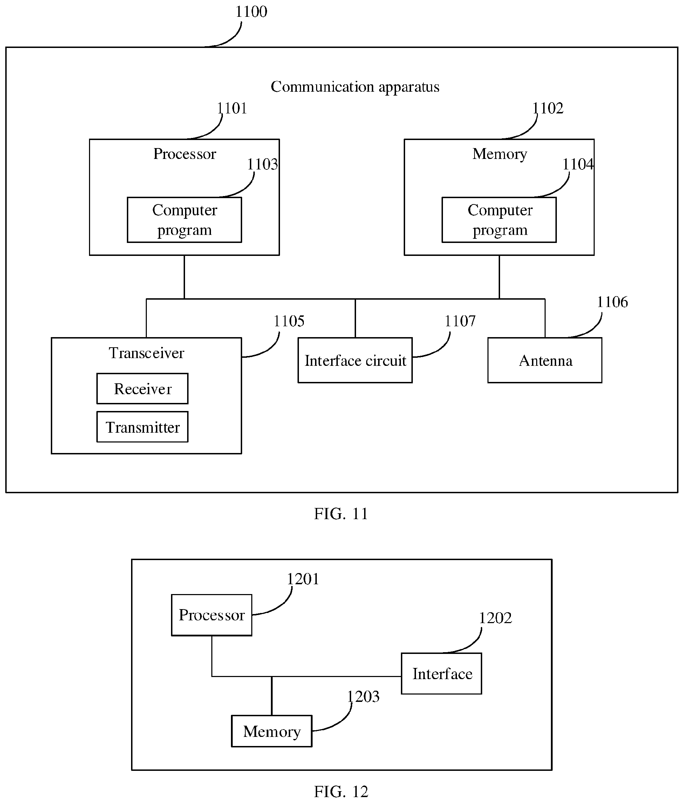

Reference is made to FIG. 11, which is a structural diagram of a communication apparatus 1100 according to embodiments of the present invention. The communication apparatus 1100 may be a network device, or a terminal, or a chip, chip system, or processor that supports the network device to implement the above method, or a chip, chip system, or processor that supports the terminal to implement the above method. The apparatus may be configured to implement the method described in the above method embodiments. For details, reference may made to the description in the above method embodiments.

The communication apparatus 1100 may include one or more processors 1101. The processor 1101 may be a general-purpose processor or a special-purpose processor, or the like. For example, the processor may be a baseband processor or a central processing unit. The baseband processor may be configured to process communication protocols and communication data. The central processing unit may be configured to control the communication apparatus (such as a base station, a baseband chip, a terminal, a terminal chip, a DU or a CU, etc.), execute a computer program, and process data for the computer program.

Optionally, the communication apparatus 1100 may further include one or more memories 1102, on which a computer program 1104 may be stored. The processor 1101 executes the computer program 1104, to cause the communication apparatus 1100 to perform the method described in the above method embodiments. Optionally, the memory 1102 may further store data. The communication apparatus 1100 and the memory 1102 may be arranged separately or integrated together.

Optionally, the communication apparatus 1100 may further include a transceiver 1105 and an antenna 1106. The transceiver 1105 may be referred to as a reception and transmission unit, a transceiver unit, a reception and transmission circuit, etc., and is configured to implement reception and transmission functions. The transceiver 1105 may include a receiver and a transmitter. The receiver may be called a receiver unit or a reception circuit, etc., configured to implement the reception function; the transmitter may be referred to as a transmitter unit, a transmission circuit, etc., configured to implement the transmission function.

Optionally, the communication apparatus 1100 may further include one or more interface circuits 1107. The interface circuit 1107 is configured to receive code instructions and transmit them to the processor 1101. The processor 1101 executes the code instructions to cause the communication apparatus 1100 to perform the method described in the above method embodiments.

The communication apparatus 1100 is a network device: the transceiver 1105 is configured to perform step 201 in FIG. 2; step 301 in FIG. 3; step 401 in FIG. 4; step 501 in FIG. 5, and step 601 in FIG. 6. The processor 1101 is configured to perform step 202 in FIG. 2; steps 302-304 in FIG. 3; steps 402-404 in FIG. 4; steps 502-504 in FIG. 5; and steps 602-604 in FIG. 6.

The communication apparatus 1100 is a terminal: the transceiver 1105 is configured to perform step 701 in FIG. 7; and steps 801 to 802 in FIG. 8.

In an implementation, the processor 1101 may include a transceiver for implementing reception and transmission functions. For example, the transceiver may be a reception and transmission circuit, an interface, or an interface circuit. The reception and transmission circuit, the interface or the interface circuit configured to implement the reception and transmission functions may be separated or integrated together. The above reception and transmission circuit, interface or interface circuit may be configured for reading and writing codes/data, or the above reception and transmission circuit, interface or interface circuit may be configured for signal transmission or transfer.

In an implementation, the processor 1101 may store a computer program 1103, and the computer program 1103 is executed on the processor 1101, to cause the communication apparatus 1100 to perform the method described in the above method embodiments. The computer program 1103 may be embedded in the processor 1101, and in this case, the processor 1101 may be implemented by hardware.

In an implementation, the communication apparatus 1100 may include a circuit, and the circuit may implement functions of reception or transmission or communication in the above method embodiments. The processor and the transceiver described in the present application may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may be manufactured using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus described in the above embodiments may be a network device or a terminal, but the scope of the communication apparatus described in the present application is not limited thereto, and the structure of the communication apparatus may not be limited to FIG. 11. The communication apparatus may be a stand-alone device or may be part of a larger device. For example, the communication apparatus may be:
(1) an independent integrated circuit (IC), or chip, or chip system or subsystem;
(2) a collection of one or more ICs, where, optionally, the IC collection may include a storage component for storing data and computer programs;
(3) ASIC, such as modem;
(4) a module that can be embedded into other devices;
(5) a receiver, terminal, intelligent terminal, a cellular phone, a wireless equipment, a handheld device, a mobile unit, a vehicle-mounted device, a network device, a cloud device, an artificial intelligence device, etc.;
(6) others, etc.

For a case where the communication apparatus may be a chip or a chip system, reference may be made to FIG. 12, which is a structural diagram of a chip. The chip shown in FIG. 12 includes a processor 1201 and an interface 1202. The quantity of processors 1201 may be one or more, and the quantity of interfaces 1202 may be multiple.

Optionally, the chip further includes a memory 1203, and the memory 1203 is configured to store needed computer programs and data.

Those skilled in the art can also understand that various illustrative logical blocks and steps listed in the embodiments of the present application can be implemented by electronic hardware, computer software, or a combination of both. Whether such functions are implemented in hardware or software depends on the specific application and the overall system design requirement. Those skilled in the art can use various methods to implement the described functions for each specific application, but such implementation should not be understood as exceeding the protection scope of the embodiments of the present application.

The present application further provides a readable storage medium, on which instructions are stored. When the instructions are executed by a computer, functions of any of the above method embodiments are implemented.

The present application further provides a computer program product. The computer program product is executed by a computer to implement functions of any of the above method embodiments.

The above embodiments may be implemented in whole or in part by software, hardware, firmware, or any combination thereof. When implemented using software, it may be implemented in whole or in part in the form of a computer program product. The computer program product includes one or more computer programs. When the computer program is loaded and executed on a computer, the processes or functions described in the embodiments of the present application are generated in whole or in part. The computer may be a general-purpose computer, a special-purpose computer, a computer network, or other programmable device. The computer program may be stored in a computer readable storage medium or transferred from a computer readable storage medium to another computer readable storage medium. For example, the computer program may be transferred from a website, computer, server, or data center to another website, computer, server or data center through wired means (such as coaxial cable, optical fiber, digital subscriber line (DSL)) or wireless means (such as infrared, radio, microwave, etc.). The computer readable storage medium may be any available medium that can be accessed by a computer, or a data storage device integrated by one or more available media, which includes a server, a data center, and so on. The available medium may be a magnetic medium (e.g., floppy disk, hard disk, magnetic tape), optical medium (e.g., high-density digital video disc (DVD)), or semiconductor medium (e.g., solid state disk (SSD)) etc.

Those of ordinary skill in the art may appreciate that the first, second, and other numerical numbers involved in the present application are only for convenience of description and are not used to limit the scope of the embodiments of the present application, or to indicate the order.

At least one in the present application may also be described as one or more, and multiple may be two, three, four or more, which are not limited by the present application. In the embodiments of the present application, technical features are distinguished by terms "first", "second", "third", "A", "B", "C" and "D", etc. The technical features described by the terms "first", "second", "third", "A", "B", "C" and "D" are not in an order of precedence or in an order of size.

The corresponding relationships shown in each table in the present application can be configured or predefined. The values of the information in each table are only examples and can be configured as other values, which is not limited by the present application. When the correspondence between information and each parameter is configured, it is not necessarily required to configure all the correspondences shown in each table. For example, in the table in the present application, the correspondences shown in some rows may not be configured. For another example, appropriate form adjustments can be made based on the above table, such as splitting, merging, etc. The names of the parameters shown in the titles of the above tables may also be other names understandable by the communication apparatus, and the values or expressions of the parameters may also be other values or expressions understandable by the communication apparatus. When implementing the above tables, other data structures can also be used, such as array, queue, container, stack, linear list, pointer, linked list, tree, graph, structure, class, heap, distributed table or hash table.

The term "predefined" in the present application may be understood as defined, pre-defined, stored, pre-stored, pre-negotiated, pre-configured, solidified, or pre-burnt.

Those of ordinary skill in the art will appreciate that the units and algorithm steps of each example described in conjunction with the embodiments disclosed herein can be implemented with electronic hardware, or a combination of computer software and electronic hardware. Whether these functions are performed in hardware or software depends on the specific application and design constraints of the technical solutions. Those of ordinary skill in the art may implement the described functions using different methods for each specific application, but such implementations should not be considered as exceeding the scope of the present application.

Those of ordinary skill in the art can clearly understand that for the convenience and simplicity of description, reference may be made to the corresponding processes in the above method embodiments for the specific operating processes of the systems, devices and units described above, which will not be further described herein.

The above descriptions are only specific embodiments of the present application, but the protection scope of the present application is not limited thereto. Any technician familiar with the technical field can easily think of changes or substitutions within the technical scope of in the present application, all of which shall fall within the protection scope of the present application. Therefore, the protection scope of the present application is defined by the protection scope of the claims.

## Claims

1. A method for configuring a transmission and reception point (TRP), performed by a network device, comprising:
receiving capability information reported by a terminal, wherein the capability information comprises at least one of: a maximum uplink timing difference supported by the terminal, or a maximum timing advance (TA) value difference supported by the terminal; and
determining whether to update a TRP configuration for the terminal based on the capability information.

2. The method according to claim 1, wherein in response to the capability information comprising the maximum uplink timing difference supported by the terminal, determining whether to update the TRP configuration for the terminal based on the capability information comprises:
determining that a first TRP among a plurality of configured TRPs corresponds to a first TA value for the terminal;
determining that a second TRP among the plurality of configured TRPs corresponds to a second TA value for the terminal; and
in response to a half of an absolute value of a difference between the first TA value and the second TA value being less than the maximum uplink timing difference, continuing to have the first TRP and/or the second TRP schedule data or a service for the terminal.

3. The method according to claim 1, wherein in response to the capability information comprising the maximum uplink timing difference supported by the terminal, determining whether to update the TRP configuration for the terminal based on the capability information comprises:
determining that a first TRP among a plurality of configured TRPs corresponds to a first TA value for the terminal;
determining that a second TRP among the plurality of configured TRPs corresponds to a second TA value for the terminal; and
in response to a half of an absolute value of a difference between the first TA value and the second TA value being greater than or equal to the maximum uplink timing difference, stopping utilizing the first TRP and the second TRP to schedule data or a service for the terminal, and updating the TRP configuration for the terminal.

4. The method according to claim 1, wherein in response to the capability information comprising the maximum TA value difference supported by the terminal, determining whether to update the TRP configuration for the terminal based on the capability information comprises:
determining that a first TRP among a plurality of configured TRPs corresponds to a first TA value for the terminal;
determining that a second TRP among the plurality of configured TRPs corresponds to a second TA value for the terminal; and
in response to an absolute value of a difference between the first TA value and the second TA value being less than the maximum TA value difference, continuing to have the first TRP and/or the second TRP schedule data or a service for the terminal.

5. The method according to claim 1, wherein in response to the capability information comprising the maximum TA value difference supported by the terminal, determining whether to update the TRP configuration for the terminal based on the capability information comprises:
determining that a first TRP among a plurality of configured TRPs corresponds to a first TA value for the terminal;
determining that a second TRP among the plurality of configured TRPs corresponds to a second TA value for the terminal; and
in response to an absolute value of a difference between the first TA value and the second TA value being greater than or equal to the maximum TA value difference, stopping utilizing the first TRP and the second TRP to schedule data or a service for the terminal, and updating the TRP configuration for the terminal.

6. The method according to claim 2 or claim 4, wherein continuing to have the first TRP and/or the second TRP schedule the data or the service for the terminal comprises:
scheduling at least one of a physical downlink control channel (PDCCH), a physical downlink shared channel (PDSCH), a physical uplink control channel (PUCCH), or a physical uplink shared channel (PUSCH) through the first TRP and/or the second TRP, to schedule the data or the service for the terminal.

7. The method according to claim 3 or claim 5, wherein updating the TRP configuration for the terminal comprises:
initializing a TRP configuration process to configure a new TRP for the terminal.

8. The method according to any one of claims 1 to 7, wherein receiving the capability information reported by the terminal comprises:
receiving the capability information reported by the terminal through a radio resource control (RRC) signaling.

9. A method for configuring a transmission and reception point (TRP), performed by a terminal, comprising:
reporting capability information to a network device, wherein the capability information comprises at least one of: a maximum uplink timing difference supported by the terminal, or a maximum timing advance (TA) value difference supported by the terminal.

10. The method according to claim 9, further comprising:
receiving a new TRP configured by the network device.

11. The method according to claim 10, wherein the TRP schedules data or a service for the terminal by scheduling at least one of a PDCCH, a PDSCH, a PUCCH, or a PUSCH.

12. The method according to any one of claims 9 to 11, wherein receiving the capability information reported by the terminal comprises:
reporting the capability information to the network device through an RRC signaling.

13. A communication apparatus, configured in a network device, comprising:
a reception and transmission module, configured to receive capability information reported by a terminal, wherein the capability information comprises at least one of: a maximum uplink timing difference supported by the terminal, or a maximum timing advance (TA) value difference supported by the terminal; and
a processing module, configured to determine whether to update a transmission and reception point (TRP) configuration for the terminal based on the capability information.

14. A communication apparatus, configured in a terminal, comprising:
a reception and transmission module, configured to report capability information to a network device, wherein the capability information comprises at least one of: a maximum uplink timing difference supported by the terminal, or a maximum timing advance (TA) value difference supported by the terminal.

15. A communication apparatus, comprising a processor and a memory, wherein a computer program is stored in the memory, and the processor is configured to execute the computer program stored in the memory to cause the communication apparatus to perform the method according to any one of claims 1 to 8, or the processor is configured to execute the computer program stored in the memory to cause the communication apparatus to perform the method according to any one of claims 9 to 12.

16. A communication apparatus, comprising a processor and an interface circuit, wherein the interface circuit is configured to receive code instructions and transmit the code instructions to the processor, and the processor is configured to execute the code instructions to perform the method according to any one of claims 1 to 8, or is configured to execute the code instructions to perform the method according to any one of claims 9 to 12.

17. A computer readable storage medium, having instructions stored thereon, wherein the instructions, when being executed, cause the method according to any one of claims 1 to 8 to be implemented, or the instructions, when being executed, cause the method according to any one of claims 9 to 12 to be implemented.
